# EUROPEAN PATENT APPLICATION

(11) **EP 4 734 250 A1**
(43) Date of publication of application: **29.04.2026**
(21) Application number: 25203774.2
(22) Date of filing: 22.09.2025
(51) Int. Cl.: H01M 50/209, H01M 50/262, H01M 50/271

(54) **BATTERY MODULE**

(30) Priority: 23.10.2024 KR 20240145780
(71) Applicant: SAMSUNG SDI CO., LTD., Yongin-si, Gyeonggi-do 17084 (KR)
(72) Inventor: JO, Yeong Seon, 16678 Suwon-si (KR); KIM, Hyun Kook, 16678 Suwon-si (KR); CHAE, Min Young, 16678 Suwon-si (KR)
(74) Representative: Marks & Clerk LLP

(57) **Abstract**

A battery module includes a housing, one or more battery cells in the housing, a holder coupled to the housing, and a cover slidably coupled to the holder in a first direction and arranged to face the holder in a second direction intersecting the first direction.

## Description

### BACKGROUND

### 1. Field

Aspects of embodiments of the present disclosure relate to a battery module.

### 2. Description of the Related Art

In general, due to the recent proliferation of electronic devices using batteries, such as mobile phones, notebook computers, and electric vehicles, the demand for secondary batteries having high energy density and high capacity has rapidly increased. Accordingly, research and development for improving the performance of a lithium secondary battery are being actively conducted.

A lithium secondary battery is a battery including a positive electrode and a negative electrode including an active material capable of intercalating and deintercalating lithium ions, and an electrolyte solution, and generates energy through oxidation/reduction reactions when lithium ions are intercalated/deintercalated at the positive and negative electrodes.

The above-described information disclosed in the technology that forms the background of the present disclosure is provided to improve understanding of the background of the present disclosure, and thus may include information that does not constitute the related art.

### SUMMARY

According to an aspect of embodiments of the present disclosure, a battery module capable of assembling a cover to a holder in a sliding manner is provided.

The above and other aspects and features of the present disclosure will be described in or will be apparent from the following description of some embodiments of the present disclosure.

According to one or more embodiments of the present disclosure, a battery module includes a housing, one or more battery cells in the housing, a holder coupled to the housing, and a cover slidably coupled to the holder in a first direction and arranged to face the holder in a second direction intersecting the first direction.

The holder may include a holder frame portion seated on the housing, and a fixing portion protruding from the holder frame portion and fixing the cover.

The fixing portion may include a first hook at a first side of the holder frame portion, a second hook at a second side of the holder frame portion, which is spaced apart from the first side in a direction opposite to the first direction, and a third hook at a third side of the holder frame portion, which intersects the first side and the second side.

A plurality of third sides may be spaced apart in a direction parallel to a third direction intersecting the first direction and the second direction.

The first hook may include a first hook body portion extending from the first side in the second direction to restrict movement of the cover in the first direction, and a first hook catching portion extending from the first hook body portion in the direction opposite to the first direction to contact a first surface of the cover to restrict movement of the cover in the second direction.

The second hook may include a second hook body portion extending from the second side in the second direction to restrict movement of the cover in the direction opposite to the first direction, and a second hook catching portion extending from the second hook body portion in the first direction to contact a first surface of the cover to restrict movement of the cover in the second direction.

The second hook catching portion may include a first inclined surface to contact a second surface of the cover, which faces a direction opposite to the first surface, to guide movement of the cover in a direction opposite the second direction.

The second hook may be elastically deformable toward the opposite direction of the first direction as the cover presses the first inclined surface in the direction opposite to the second direction.

The third hook may include a third hook body portion extending from the third side in the second direction and passing through the cover in the second direction, and a third hook catching portion extending from the third hook body portion in a direction parallel to a third direction intersecting the first direction and the second direction to contact a first surface of the cover to restrict movement of the cover in the second direction.

The cover may include a first portion seated on the first side and positioned to be caught by the first hook, a second portion seated on the second side and positioned to be caught by the second hook, and a third portion seated on the third side and positioned to be caught by the third hook.

The third portion may include a first slit hole portion through which the third hook passes in the second direction and a second slit hole portion extending from the first slit hole portion in the direction opposite to the first direction and through which the third hook passes in the second direction.

A width of the second slit hole portion parallel to a third direction intersecting the first direction and the second direction may be smaller than a width of the first slit hole portion parallel to the third direction.

The third hook may contact a first surface of the cover as the third hook is positioned in the second slit hole portion.

The fixing portion may further include a protrusion extending from the second side in the second direction, spaced apart from the second hook in the first direction, and passing through the second portion.

The second portion may include a first through hole portion through which the protrusion passes in the second direction.

The second hook may include a first hook extension portion extending from the second side in the second direction and passing through the second portion to restrict movement of the cover in the first direction, a second hook extension portion extending from the first hook extension portion in the opposite direction of the first direction to contact a first surface of the cover to restrict movement of the cover in the second direction, and a hook catching portion extending from the second hook extension portion in a direction opposite to the second direction to restrict movement of the cover in the direction opposite to the first direction.

The second portion may include a second through hole portion through which the second hook passes.

The hook catching portion may include a second inclined surface that interferes with the second through hole portion and allows movement of the cover in the first direction.

The second hook may be elastically deformable toward the second direction as the second portion presses the second inclined surface in the first direction.

The cover may include an elastically deformable material.

At least some of the above and other features of the invention are set out in the claims.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure is not to be construed as being limited to the drawings.
FIG. 1 is a perspective view schematically illustrating a battery module according to an embodiment of the present disclosure;
FIG. 2 is an exploded perspective view schematically illustrating the battery module of FIG. 1;
FIG. 3 is a perspective view schematically illustrating a battery cell according to an embodiment of the present disclosure;
FIG. 4 is a cross-sectional view schematically illustrating the battery cell of FIG. 3;
FIG. 5 is a plan view schematically illustrating a holder according to an embodiment of the present disclosure;
FIG. 6 is a plan view schematically illustrating a cover according to an embodiment of the present disclosure;
FIG. 7 is a partial enlarged perspective view schematically illustrating a state before a first portion of the cover of FIG. 6 is caught by a first hook;
FIG. 8 is a partial enlarged perspective view schematically illustrating a state in which the first portion of the cover of FIG. 6 is caught by the first hook;
FIG. 9 is a partial enlarged perspective view schematically illustrating a state before a second portion of the cover of FIG. 6 is caught by a second hook;
FIG. 10 is a partial enlarged perspective view schematically illustrating a state in which the second portion of the cover of FIG. 6 is caught by the second hook;
FIG. 11 is a cross-sectional view schematically illustrating a state in which the second hook according to an embodiment of the present disclosure is elastically deformed;
FIG. 12 is a partial enlarged perspective view schematically illustrating a state before a third portion of the cover of FIG. 6 is caught by a third hook;
FIG. 13 is a partial enlarged perspective view schematically illustrating a state in which the third portion of the cover of FIG. 6 is caught by the third hook;
FIG. 14 is a plan view schematically illustrating a holder according to an embodiment of the present disclosure;
FIG. 15 is a plan view schematically illustrating a cover according to an embodiment of the present disclosure;
FIG. 16 is a partial enlarged perspective view schematically illustrating a state before a second portion of the cover of FIG. 15 is caught by a second hook;
FIG. 17 is a partial enlarged perspective view schematically illustrating a state in which the second portion of the cover of FIG. 15 is caught by the second hook; and
FIG. 18 is a cross-sectional view schematically illustrating a state in which the second hook according to an embodiment of the present disclosure is elastically deformed.

### DETAILED DESCRIPTION

Herein, some embodiments of the present disclosure will be described, in further detail, with reference to the accompanying drawings. The terms or words used in this specification and claims should not be construed as being limited to the usual or dictionary meaning and should be interpreted as having a meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element, or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

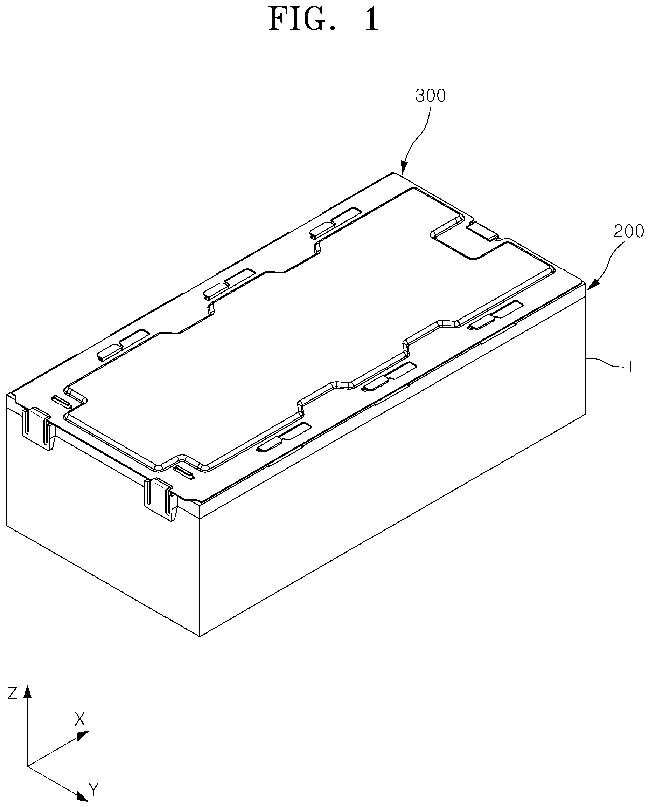

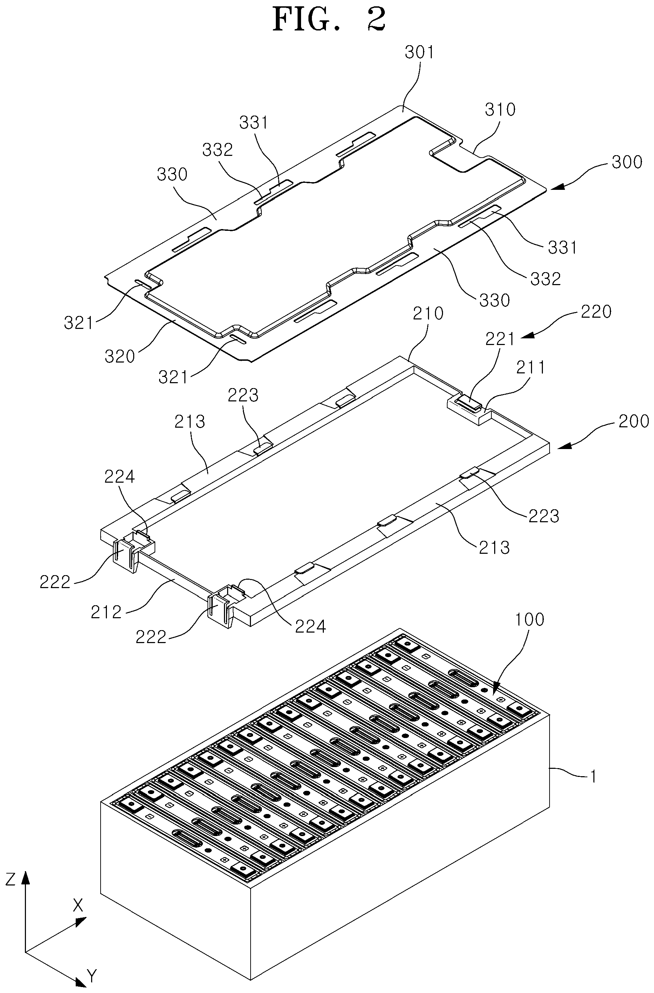

FIG. 1 is a perspective view schematically illustrating a battery module according to an embodiment of the present disclosure; and FIG. 2 is an exploded perspective view schematically illustrating the battery module of FIG. 1.

Referring to FIGS. 1 and 2, the battery module according to an embodiment of the present disclosure may include a housing 1, a battery cell 100, a holder 200, and a cover 300.

The housing 1 may support the battery cell 100 and protect the battery cell 100 from an external impact and foreign substances. The housing 1 may provide an interior space for accommodating the battery cell 100.

In an embodiment, the housing 1 may be formed to have a shape of a box with an empty interior and an open side. For example, the open side of the housing 1 may be disposed to face upward, as shown in FIG. 2. However, a cross-sectional shape of the housing 1 is not limited to a rectangular shape, as illustrated in FIGS. 1 and 2 and may have any of various shapes, such as a polygonal shape, a circular shape, or an oval shape.

The battery cell 100 may function as a unit structure for storing and supplying power in the battery module. The battery cell 100 may be disposed inside the housing 1.

One or more battery cells 100 may be provided. Although FIG. 2 illustrates an example in which a plurality of battery cells 100 are provided, the battery cells 100 are not limited thereto and a single battery cell 100 may be provided.

If the plurality of battery cells 100 is provided, the plurality of battery cells 100 may be arranged in a plurality of rows inside the housing 1. For example, the plurality of battery cells 100 may be arranged in a plurality of rows in a longitudinal direction (e.g., an X-axis direction based on FIG. 2) of the housing 1.

However, an arrangement form of the plurality of battery cells 100 is not limited thereto, and the battery cells 100 may be arranged in a plurality of rows in a width direction (e.g., a Y-axis direction based on FIG. 2) of the housing 1 or in a plurality of rows in the longitudinal and width directions of the housing 1.

Here, a first direction may refer to an X-axis direction based on FIGS. 1 and 2, a second direction may refer to a Z-axis direction based on FIGS. 1 and 2, that is, a height direction of the housing 1, and a third direction may refer to a Y-axis direction based on FIGS. 1 and 2.

Herein, the battery cell 100 will be described as an example of a lithium-ion secondary battery, which is a prismatic battery. However, the present disclosure is not limited thereto, and the battery cell 100 may be a lithium polymer battery or a cylindrical battery, for example.

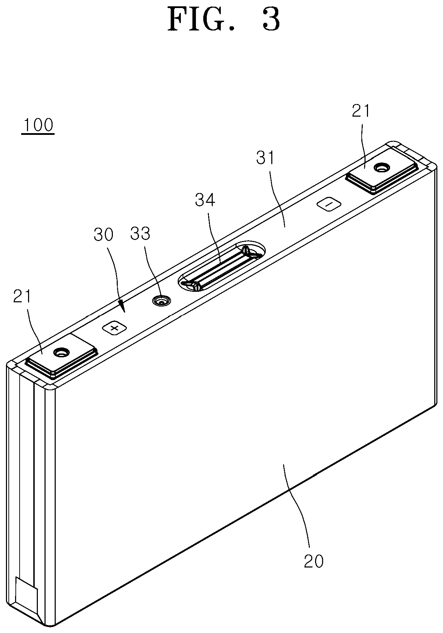

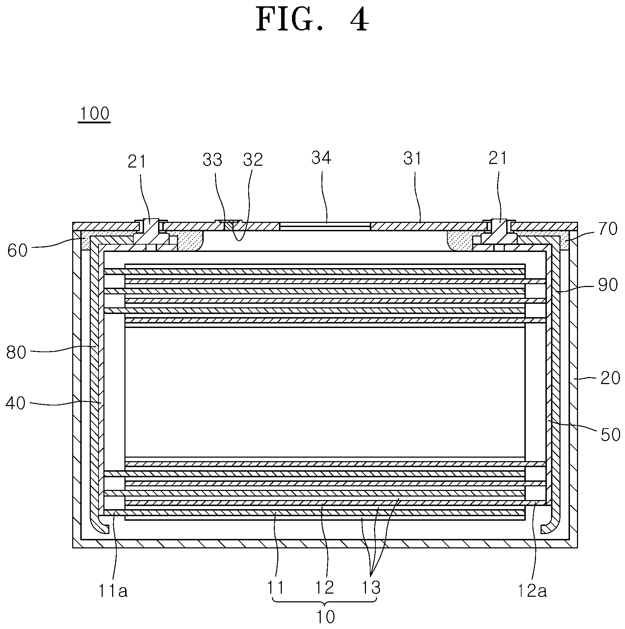

FIG. 3 is a perspective view schematically illustrating a battery cell according to an embodiment of the present disclosure; and FIG. 4 is a cross-sectional view schematically illustrating the battery cell of FIG. 3.

Referring to FIGS. 1 to 4, the battery cell 100 according to an embodiment of the present disclosure may include at least one electrode assembly 10 wound with a separator 13, which is an insulator, interposed between a positive electrode 11 and a negative electrode 12, a case 20 in which the electrode assembly 10 is accommodated, and a cap assembly 30 coupled to an opening of the case 20.

The positive electrode 11 and the negative electrode 12 may include a coated portion, which is an area where an active material is applied on a current collector formed of a thin metal foil, and uncoated portions 11a and 12a which are areas where the active material is not applied.

The positive electrode 11 and the negative electrode 12 may be wound after interposing the separator 13, which is an insulator, therebetween. However, the present disclosure is not limited thereto, and the electrode assembly 10 may also have a structure in which the positive electrode 11 and the negative electrode 12 made of a plurality of sheets that are alternately stacked with the separator 13 interposed therebetween.

The case 20 may form an overall exterior of the battery cell 100 and may be formed of a conductive metal, such as aluminum, an aluminum alloy, or nickel-plated steel. The case 20 may provide a space in which the electrode assembly 10 is accommodated.

The cap assembly 30 may include a cap plate 31 covering the opening of the case 20, and the case 20 and the cap plate 31 may be made of a conductive material. A cell terminal 21 electrically connected to the positive electrode 11 or the negative electrode 12 may be installed to pass through the cap plate 31 and protrude outward.

In an embodiment, an outer surface of an upper column of the cell terminal 21 protruding outward from the cap plate 31 may be threaded and may be fixed to the cap plate 31 with a nut. However, the present disclosure is not limited thereto, and, in an embodiment, the cell terminal 21 may have a rivet structure and may be riveted or welded to the cap plate 31.

In an embodiment, the cap plate 31 may be made of a thin plate and may be coupled to the opening of the case 20, and an electrolyte inlet 32 in which a sealing cap 33 may be installed may be formed in the cap plate 31, and a vent 34 in which a notch is formed may be installed.

The vent 34 may open and close in response to changes in an internal pressure in the case 20. That is, the vent 34 may remain closed during normal operation of the electrode assembly 10 to seal the case 20.

The vent 34 may open if the internal pressure of the case 20 rises above a certain, or set, value due to overcharging or a fire, for example, and may discharge emissions, such as flames, gases, or the like from the inside of the case 20 to the outside of the case 20.

The cell terminal 21 may be electrically connected to a current collector including first and second current collectors 40 and 50 (herein referred to as positive and negative electrode current collectors) joined to a positive electrode uncoated portion 11a or a negative electrode uncoated portion 12a by welding, for example.

For example, the cell terminal 21 may be joined to the positive and negative electrode current collectors 40 and 50 by welding. However, the present disclosure is not limited thereto, and the cell terminal 21 and, in an embodiment, the positive and negative electrode current collectors 40 and 50 may be formed to be integrally joined.

In an embodiment, an insulating member may be installed between the electrode assembly 10 and the cap plate 31. In an embodiment, the insulating member may include first and second lower insulating members 60 and 70, and each of the first and second lower insulating members 60 and 70 may be installed between the electrode assembly 10 and the cap plate 31.

In an embodiment, an end of a separating member which may be installed to face a side surface of the electrode assembly 10 may be installed between the insulating member and the cell terminal 21. The separating member may include first and second separating members 80 and 90.

Accordingly, an end of each of the first and second separating members 80 and 90, which may be installed to face a side surface of the electrode assembly 10, may be installed between each of the first and second lower insulating members 60 and 70 and the cell terminal 21.

As a result, the cell terminal 21 welded to each of the positive and negative electrode current collectors 40 and 50 may be coupled to an end of each of the first and second lower insulating member 60 and 70 and the first and second separating members 80 and 90.

The cell terminal 21 may be provided on an upper surface of the battery cell 100. The cell terminal 21 may protrude from the upper surface of the battery cell 100 in the second direction. The cell terminal 21 may protrude upward from the upper surface of the battery cell 100 in a direction in which the holder 200 and the cover 300 to be described below are located.

The cell terminals 21 may be provided as a pair. In an embodiment, the pair of cell terminals 21 may be disposed symmetrically on both, or opposite, sides of the battery cell 100. The pair of cell terminals 21 may have different polarities.

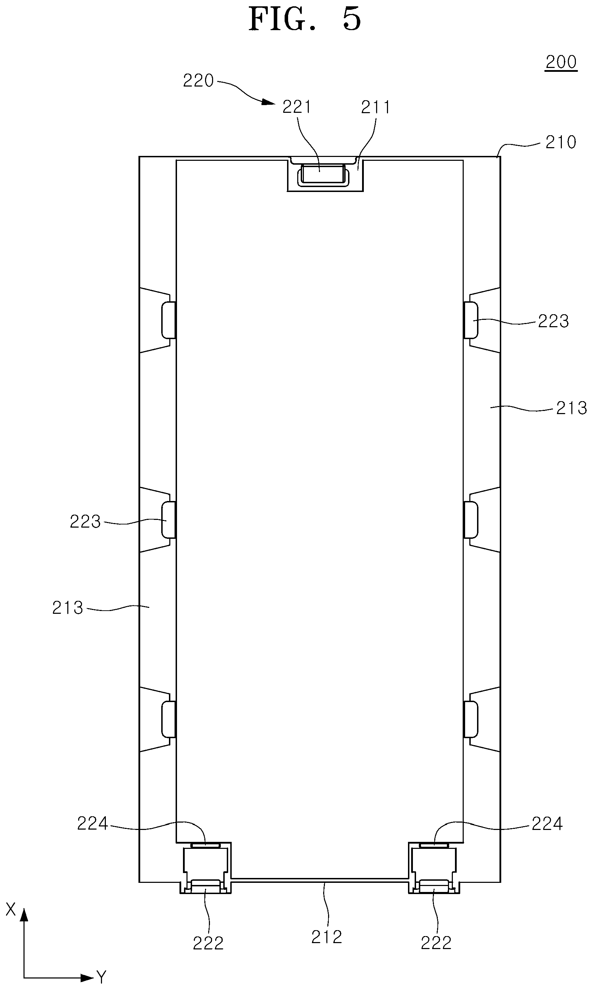

FIG. 5 is a plan view schematically illustrating a holder according to an embodiment of the present disclosure.

Referring to FIGS. 1, 2 and 5, the holder 200 according to an embodiment of the invention may be coupled to the housing 1. The holder 200 may be coupled to the housing 1 by any of various types of coupling methods, such as welding, bolting, fitting, etc.

The holder 200 may be formed to have a generally flat plate shape. The holder 200 may be disposed on an upper side of the battery cell 100. The holder 200 may be disposed to face the battery cell 100 in a direction parallel to the second direction.

The holder 200 may be disposed between the housing 1 and the cover 300. The holder 200 may be disposed such that both, or opposite, sides respectively face a lower surface of the cover 300 and an upper surface of the battery cell 100 in parallel.

The holder 200 may be, for example, a busbar holder equipped with a busbar that is individually connected to a plurality of cell terminals 21 to connect a plurality of battery cells 100 in series or parallel.

The holder 200 may include a holder frame portion 210 and a fixing portion 220.

The holder frame portion 210 generally forms an appearance of the holder 200 and may support the fixing portion 220 as a whole. The holder frame portion 210 may be formed to have a plate shape or may be formed as a frame shape with an open center portion.

The holder frame portion 210 may be seated on the housing 1. The holder frame portion 210 may be disposed to face an open side of the housing 1, such as an upper side surface of the housing 1. In an embodiment, the holder frame portion 210 may be seated on an edge of the housing 1. The holder frame portion 210 may be fixed to the housing 1 by any of various types of coupling methods, such as bolting, welding, fitting, etc.

The holder frame portion 210 may include a first side 211, a second side 212, and a third side 213. In an embodiment, the first side 211, the second side 212, and the third side 213 may be integrally formed.

The first side 211 and the second side 212 may be disposed to be spaced apart from each other in a direction parallel to the first direction. The first side 211 and the second side 212 may be disposed parallel to each other.

The second side 212 may be disposed to be spaced apart from the first side 211 in a direction opposite to the first direction.

The third side 213 may be disposed to intersect the first side 211 and the second side 212. The third side 213 may be disposed between the first side 211 and the second side 212. In an embodiment, a length of the third side 213 parallel to the first direction may be longer than the lengths of the first side 211 and the second side 212 parallel to the third direction.

A plurality of third sides 213 may be provided. At least one pair of third sides 213 may be disposed to be spaced apart in a direction parallel to the third direction. The pair of third sides 213 may be disposed parallel to each other.

In an embodiment, the fixing portion 220 may be integrally provided with the holder frame portion 210. The fixing portion 220 may be formed to protrude from the holder frame portion 210. The fixing portion 220 may fix the cover 300. The fixing portion 220 may fix the cover 300 to the holder frame portion 210.

In an embodiment, the fixing portion 220 may be disposed in multiple pieces spaced apart along the edge of the holder frame portion 210. In an embodiment, the fixing portion 220 may include an elastically deformable material. For example, the fixing portion 220 may include a plastic material.

In an embodiment, the fixing portion 220 may include a first hook 221, a second hook 222, and a third hook 223.

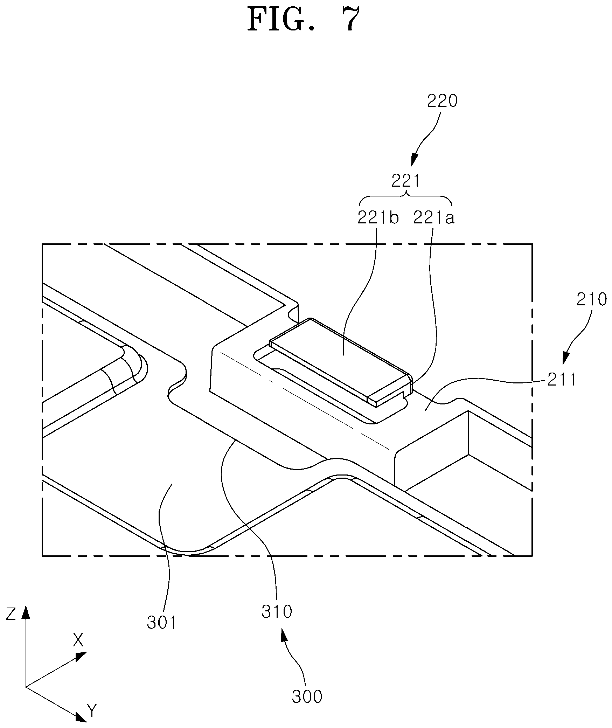

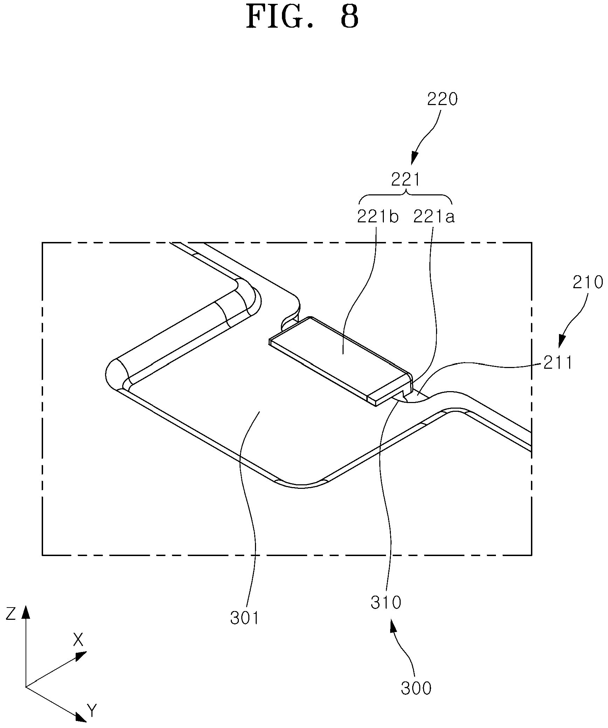

FIG. 7 is a partial enlarged perspective view schematically illustrating a state before a first portion of a cover according to an embodiment of the present disclosure is caught by a first hook; and FIG. 8 is a partial enlarged perspective view schematically illustrating a state in which the first portion of the cover according to an embodiment of the present disclosure is caught by the first hook.

Referring to FIGS. 2, 5, 7, and 8, the first hook 221 may be provided on the first side 211 of the holder frame portion 210. In an embodiment, the first hook 221 may be disposed in a center portion of the first side 211.

The first hook 221 may fix a first portion 310 of the cover 300. The first hook 221 may include a first hook body portion 221a and a first hook catching portion 221b.

The first hook body portion 221a may extend in the second direction from the first side 211 of the holder frame portion 210. The first hook body portion 221a may restrict movement of the cover 300 in the first direction.

As the first hook body portion 221a comes into contact with the first portion 310 of the cover 300, movement of the cover 300 in the first direction may be restricted.

The first hook catching portion 221b may extend in the direction opposite to the first direction from the first hook body portion 221a. The first hook catching portion 221b may restrict the movement of the cover 300 in the second direction. The first hook catching portion 221b may come into contact with a first surface 301 of the cover 300. As a lower surface of the first hook catching portion 221b comes into contact with the first surface 301 of the cover 300, movement of the first portion 310 in the second direction may be restricted.

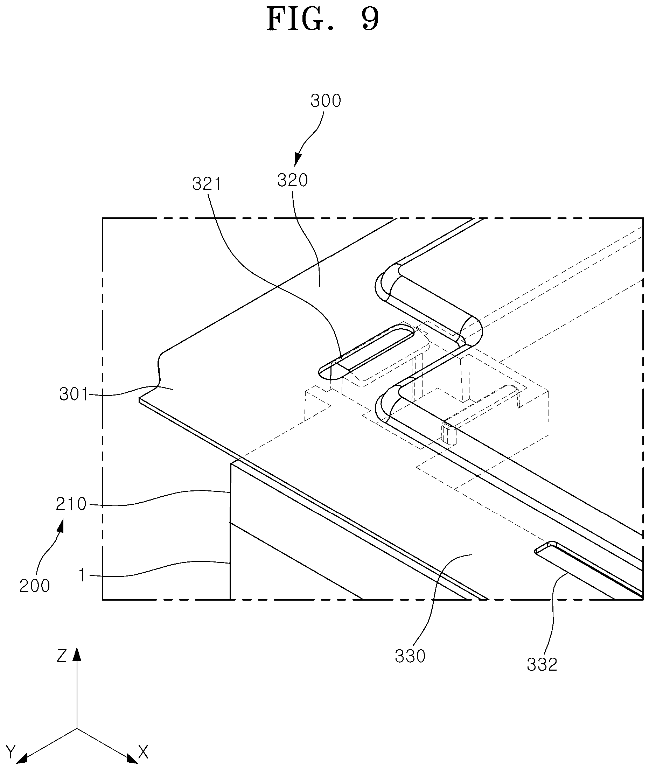

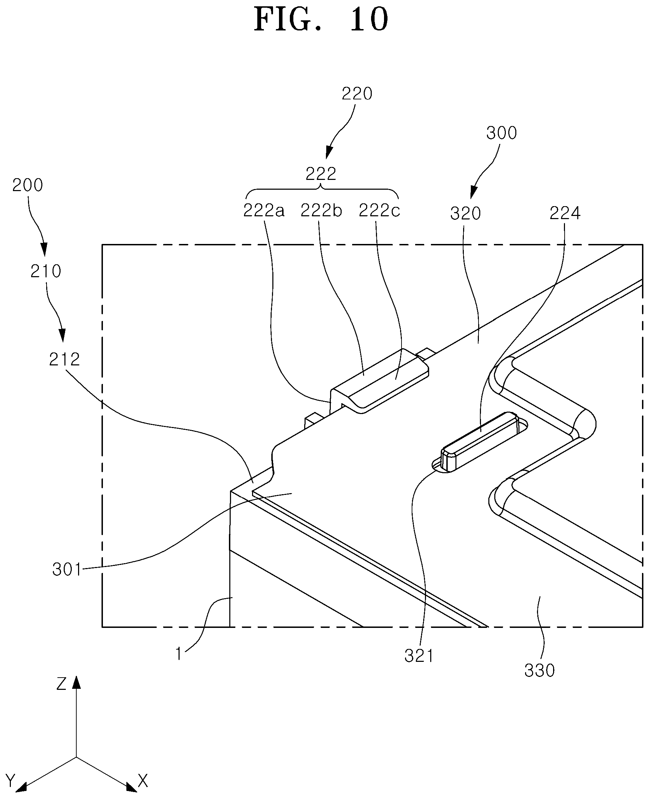

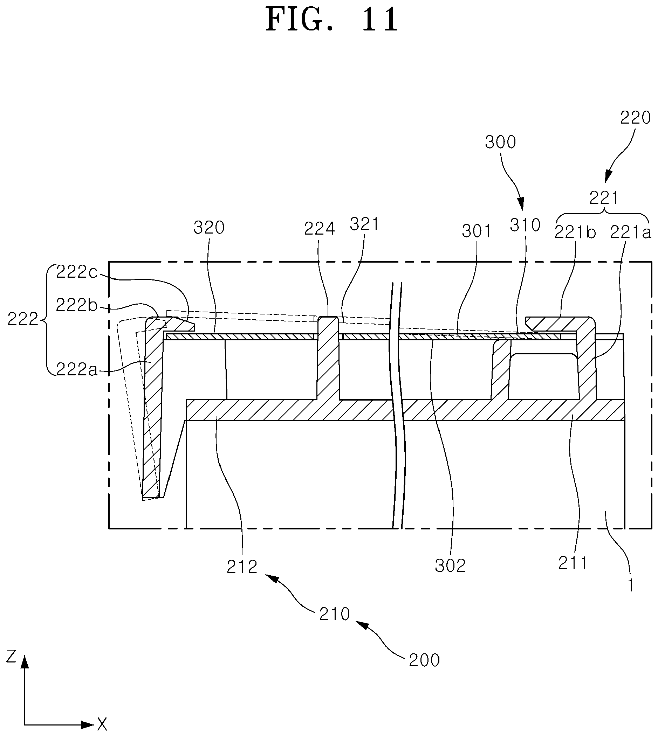

FIG. 9 is a partial enlarged perspective view schematically illustrating a state before a second portion of the cover according to an embodiment of the present disclosure is caught by a second hook; FIG. 10 is a partial enlarged perspective view schematically illustrating a state in which the second portion of the cover according to an embodiment of the present disclosure is caught by the second hook; and FIG. 11 is a cross-sectional view schematically illustrating a state in which the second hook according to an embodiment of the present disclosure is elastically deformed.

Referring to FIGS. 2, 5, and 9 to 11, the second hook 222 may be provided on the second side 212 of the holder frame portion 210. A plurality of second hooks 222 may be provided. At least one pair of second hooks 222 may be disposed to be spaced apart in a direction parallel to the third direction.

The second hook 222 may fix a second portion 320 of the cover 300. The second hook 222 may include a second hook body portion 222a and a second hook catching portion 222b.

The second hook body portion 222a may extend in the second direction from the second side 212 of the holder frame portion 210. The second hook body portion 222a may restrict the movement of the cover 300 in the direction opposite to the first direction.

As the second hook body portion 222a comes into contact with the second portion 320 of the cover 300, movement of the cover 300 in the direction opposite to the first direction may be restricted.

The second hook catching portion 222b may extend in the first direction from the second hook body portion 222a.

The second hook catching portion 222b may restrict movement of the cover 300 in the second direction. The second hook catching portion 222b may come into contact with the first surface 301 of the cover 300. As a lower surface of the second hook catching portion 222b comes into contact with the first surface 301 of the cover 300, movement of the second portion 320 in the second direction may be restricted.

The second hook catching portion 222b according to an embodiment may further include a first inclined surface 222c. The first inclined surface 222c may be formed on an upper surface of the second hook catching portion 222b (as shown in FIGS. 10 and 11). The first inclined surface 222c may be formed to be inclined downward from the upper surface of the second hook catching portion 222b in the first direction.

The first inclined surface 222c may come into contact with a second surface 302 of the cover 300 that is disposed to face a direction opposite to the first surface 301 of the cover 300. The first inclined surface 222c may guide movement of the cover 300 in a direction opposite to the second direction. In an embodiment, the first inclined surface 222c may guide movement of the second portion 320 in the direction opposite to the second direction.

As the cover 300 presses the first inclined surface 222c in the direction opposite to the second direction, the second hook 222 may be elastically deformed toward the opposite direction of the first direction. In an embodiment, as the second portion 320 presses the first inclined surface 222c in the opposite direction of the second direction, the second hook 222 may be elastically deformed toward the direction opposite to the first direction.

The fixing portion 220 according to an embodiment may further include a protrusion 224. The protrusion 224 may be provided on the second side 212 of the holder frame portion 210. The protrusion 224 may extend from the second side 212 in the second direction.

The protrusion 224 may be disposed to be spaced apart from the second hook 222 in the first direction. In an embodiment, a plurality of protrusions 224 may be provided. At least one pair of protrusions 224 may be disposed to be spaced apart in a direction parallel to the third direction.

The protrusion 224 may pass through the cover 300. The protrusion 224 may pass through a first through hole portion 321 formed in the second portion 320 of the cover 300 in the second direction. The protrusion 224 may fix the second portion 320 of the cover 300.

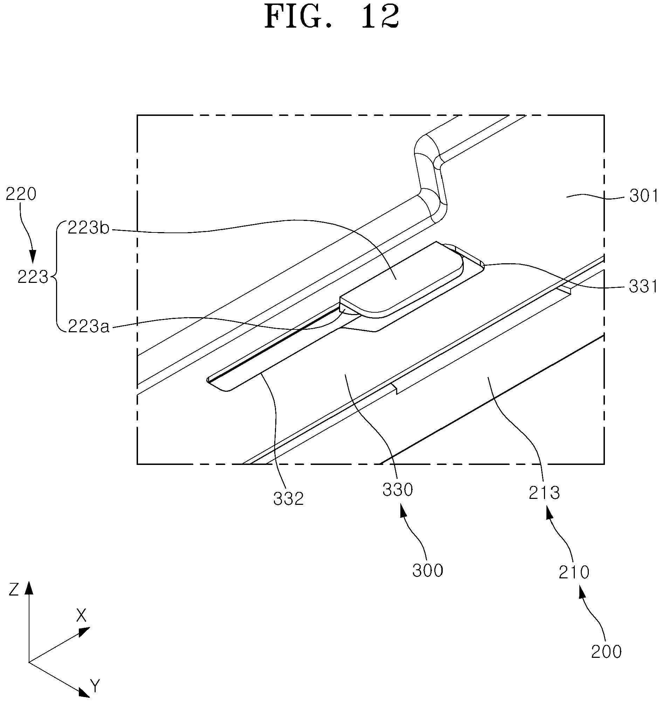

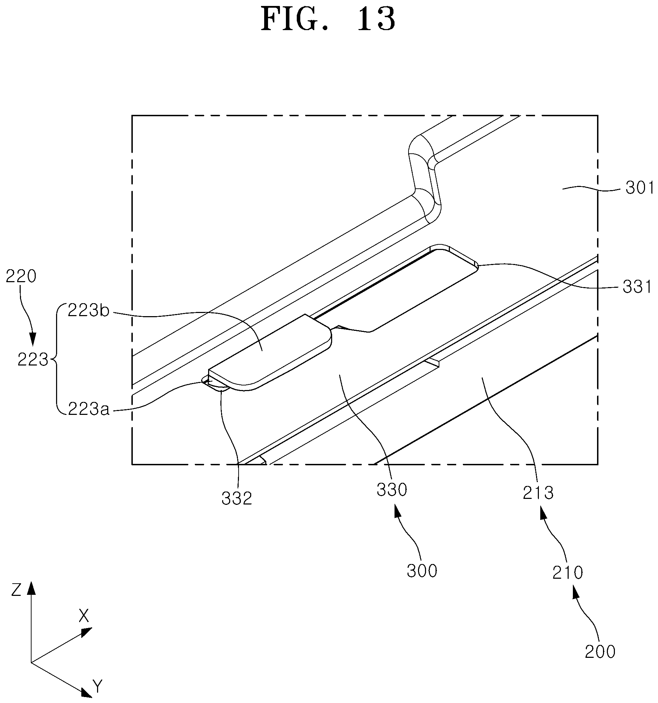

FIG. 12 is a partial enlarged perspective view schematically illustrating a state before a third portion of the cover according to an embodiment of the present disclosure is caught by a third hook; and FIG. 13 is a partial enlarged perspective view schematically illustrating a state in which the third portion of the cover according to an embodiment of the present disclosure is caught by the third hook.

Referring to FIGS. 2, 5, 12, and 13, the third hook 223 may be provided on the third side 213 of the holder frame portion 210. In an embodiment, a plurality of third hooks 223 may be provided. The plurality of third hooks 223 may be disposed to be spaced apart in a direction parallel to the first direction.

The third hook 223 may fix a third portion 330 of the cover 300. The third hook 223 may include a third hook body portion 223a and a third hook catching portion 223b.

The third hook body portion 223a may extend in the second direction from the third side 213 of the holder frame portion 210. The third hook body portion 223a may pass through the cover 300 in the second direction. The third hook body portion 223a may pass through a first slit hole portion 331 and a second slit hole portion 332 formed in the third portion 330 of the cover 300.

The third hook catching portion 223b may extend from the third hook body portion 223a in a direction parallel to the third direction.

The third hook catching portion 223b may restrict movement of the cover 300 in the second direction. The third hook catching portion 223b may come into contact with the first surface 301 of the cover 300. As a lower surface of the third hook catching portion 223b comes into contact with the first surface 301 of the cover 300, movement of the third portion 330 in the second direction may be restricted.

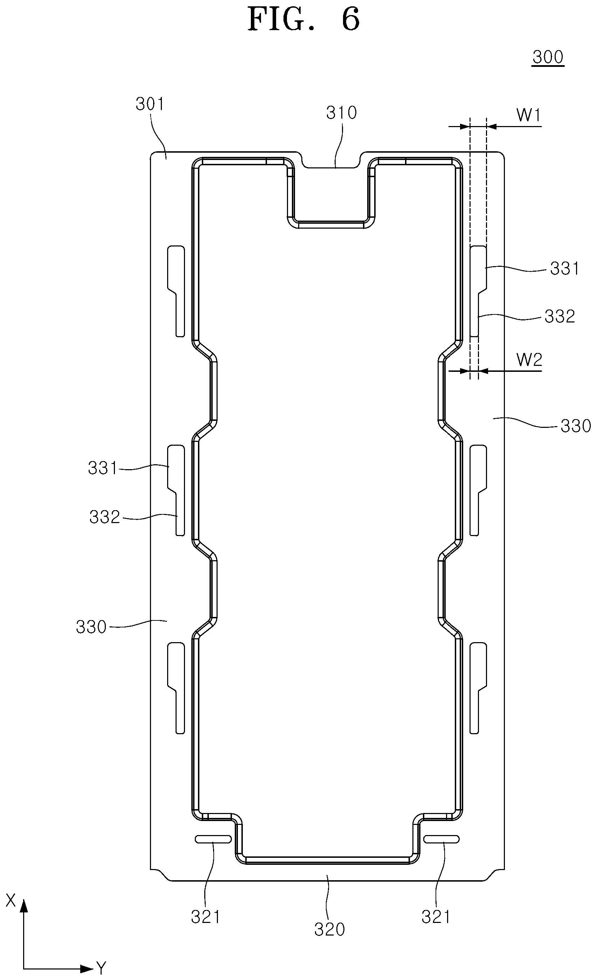

FIG. 6 is a plan view schematically illustrating the cover according to an embodiment of the present disclosure.

Referring to FIGS. 1, 2, and 6, the cover 300 according to the first embodiment of the present disclosure may be coupled to the holder 200. The cover 300 may be slidably coupled to the holder 200 in the first direction.

The cover 300 may have a generally flat plate shape. The cover 300 may be disposed on an upper side of the holder 200. The cover 300 may be disposed to face the holder 200 in a direction parallel to the second direction.

The cover 300 may protect and insulate an upper circuit disposed on an upper side of the battery cell 100 and the busbar installed in the holder 200 from contamination.

The cover 300 may include an elastically deformable material. For example, the cover 300 may include a plastic material.

The cover 300 may include the first surface 301 and the second surface 302 disposed to face a direction opposite to the first surface 301. The first surface 301 may be disposed to face the second direction, and the second surface 302 may be disposed to face the direction opposite to the second direction.

The second surface 302 of the cover 300 may be disposed to face the holder 200. The first surface 301 may refer to an upper surface of the cover 300, and the second surface 302 may refer to a lower surface of the cover 300.

The cover 300 may include the first portion 310, the second portion 320, and the third portion 330. In an embodiment, the first portion 310, the second portion 320, and the third portion 330 may be integrally formed.

Referring to FIGS. 2, 5, and 8, the first portion 310 of the cover 300 may be seated on the first side 211 of the holder frame portion 210. The first portion 310 may be disposed to face the first side 211 in a direction parallel to the second direction.

The first portion 310 of the cover 300 may be positioned to be caught by the first hook 221. As the cover 300 moves in the first direction, the first portion 310 of the cover 300 may come into contact with the first hook body portion 221a, which restricts movement of the cover 300 in the first direction, and, as the first surface 301 of the cover 300 comes into contact with the lower surface of the first hook catching portion 221b, movement of the first portion 310 in the second direction may be restricted.

Referring to FIGS. 2, 5, 6, 9, and 11, the second portion 320 of the cover 300 may be seated on the second side 212 of the holder frame portion 210. The second portion 320 may be disposed to face the second side 212 in a direction parallel to the second direction.

The second portion 320 of the cover 300 may be positioned to be caught by the second hook 222. As the second portion 320 of the cover 300 presses the first inclined surface 222c in the direction opposite to the second direction while the second surface 302 of the cover 300 is seated on the first inclined surface 222c, the second hook 222 is elastically deformed in the opposite direction of the first direction, and the second portion 320 is guided to move in the direction opposite to the second direction along the first inclined surface 222c so as to be seated on the second side 212.

As the second portion 320 of the cover 300 is seated on the second side 212 of the holder frame portion 210, movement of the second portion 320 in the direction opposite to the first direction of the cover 300 may be restricted as the second portion 320 comes into contact with the elastically restored second hook body portion 222a, and movement of the second portion 320 in the second direction may be restricted as the first surface 301 of the cover 300 comes into contact with the lower surface of the second hook catching portion 222b.

The cover 300 according to an embodiment may be provided with the first through hole portion 321. The first through hole portion 321 may be provided in the second portion 320 of the cover 300. The first through hole portion 321 may be formed by passing through the second portion 320 in a direction parallel to the second direction.

In an embodiment, a plurality of first through hole portions 321 may be provided. At least one pair of first through hole portions 321 may be disposed to be spaced apart in a direction parallel to the third direction.

The first through hole portion 321 may be disposed to face the protrusion 224 in a direction parallel to the second direction. The protrusion 224 may pass through the first through hole portion 321 in the second direction such that the second portion 320 of the cover 300 may be fixed by the protrusion 224.

Referring to FIGS. 2, 5, 6, 12, and 13, the third portion 330 of the cover 300 may be seated on the third side 213 of the holder frame portion 210. The third portion 330 may be disposed to face the third side 213 in a direction parallel to the second direction.

The third portion 330 of the cover 300 may be positioned to be caught by the third hook 223. The cover 300 according to an embodiment may be provided with the first slit hole portion 331 and the second slit hole portion 332. The first slit hole portion 331 and the second slit hole portion 332 may be provided in the third portion 330 of the cover 300.

The first slit hole portion 331 may be formed by passing through the third portion 330 in a direction parallel to the second direction. In an embodiment, the first slit hole portion 331 may be formed in a long hole shape in a direction parallel to the first direction. The third hook 223 may pass through the first slit hole portion 331 in the second direction.

The second slit hole portion 332 may be formed by passing through the third portion 330 in a direction parallel to the second direction. The second slit hole portion 332 may extend from the first slit hole portion 331 in the direction opposite to the first direction. The first slit hole portion 331 and the second slit hole portion 332 may be connected to each other.

In an embodiment, the second slit hole portion 332 may be formed in a long hole shape in a direction parallel to the first direction.

A width W2 of the second slit hole portion 332 parallel to the third direction may be formed smaller than a width W1 of the first slit hole portion 331 parallel to the third direction. See FIG. 6.

The third hook body portion 223a may pass through the second slit hole portion 332 in the second direction. The width W2 of the second slit hole portion 332 parallel to the third direction may be formed smaller than a width of the third hook catching portion 223b parallel to the third direction.

As the third hook 223 is positioned in the second slit hole portion 332, the third hook 223 may come into contact with the first surface 301 of the cover 300. In an embodiment, as the cover 300 moves in the first direction with the third hook 223 positioned in the first slit hole portion 331, the third hook body portion 223a may be positioned in the second slit hole portion 332, and, as the first surface 301 of the cover 300 comes into contact with the lower surface of the third hook catching portion 223b, movement of the third portion 330 in the second direction may be restricted.

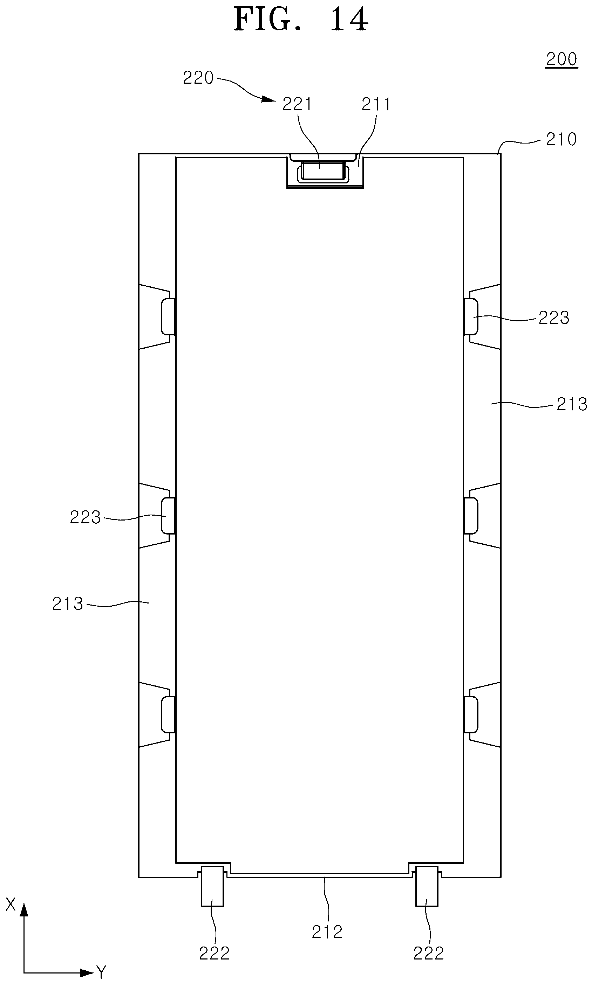

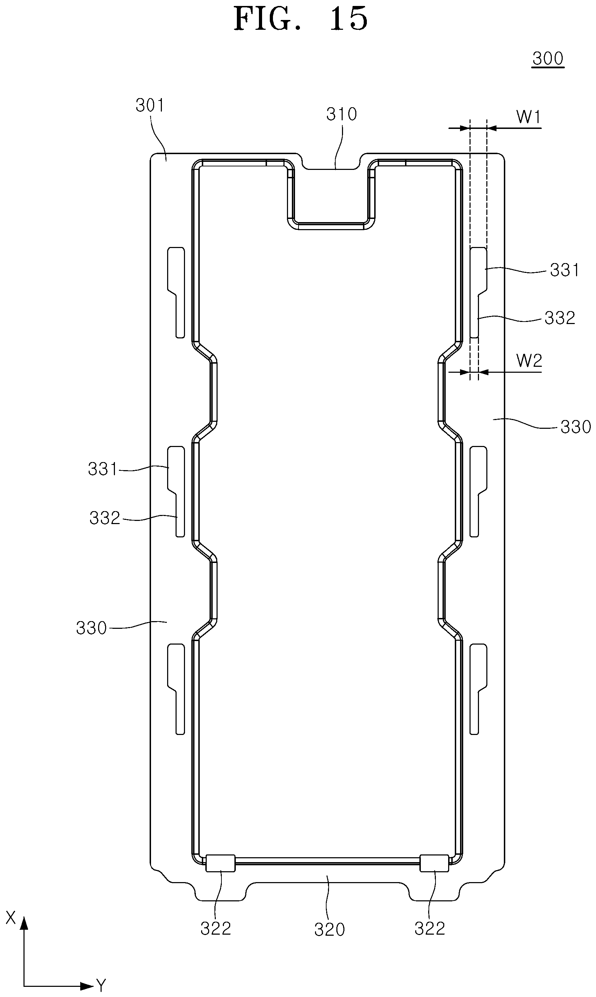

FIG. 14 is a perspective view schematically illustrating a holder according to an embodiment of the present disclosure; and FIG. 15 is a plan view schematically illustrating a cover according to an embodiment of the present disclosure.

Referring to FIGS. 1 to 4, 14, and 15, a battery module according to an embodiment of the present disclosure may include a housing 1, a battery cell 100, a holder 200, and a cover 300.

In describing the battery module according to the present embodiment of the present disclosure, other embodiments or features of the second hook 222 and the cover 300 that differ to those described in respect of the battery module according to the previously described embodiment of the present disclosure, will now be described.

For a remaining configuration of the battery module according to the present embodiment of the present disclosure, the description of the battery module according to the previously described embodiment of the present disclosure may be applied.

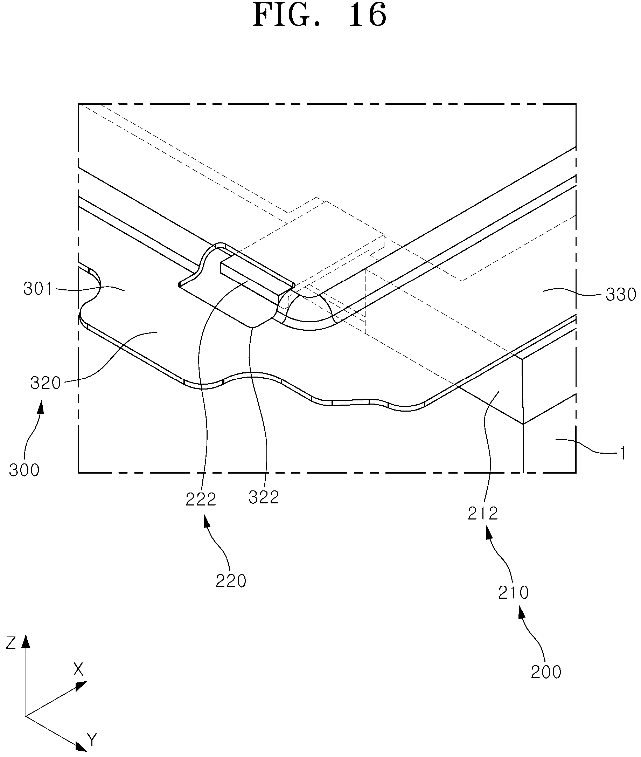

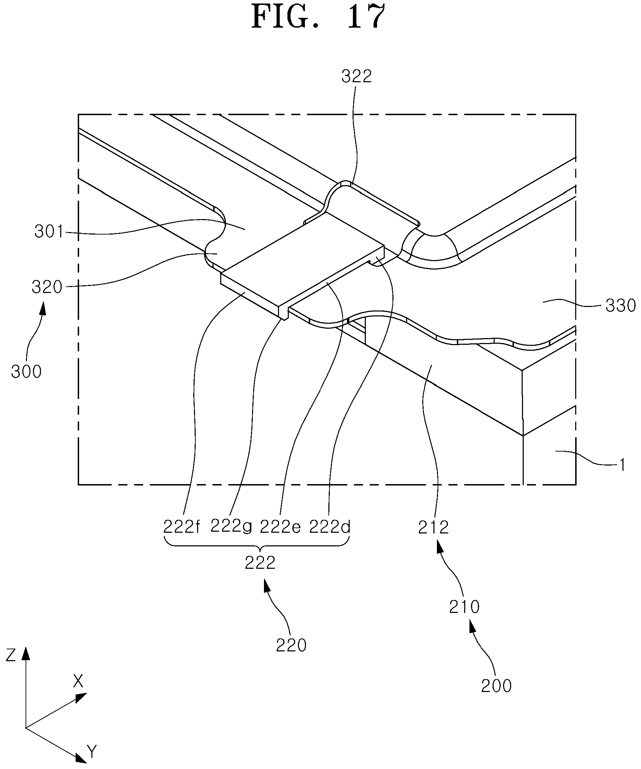

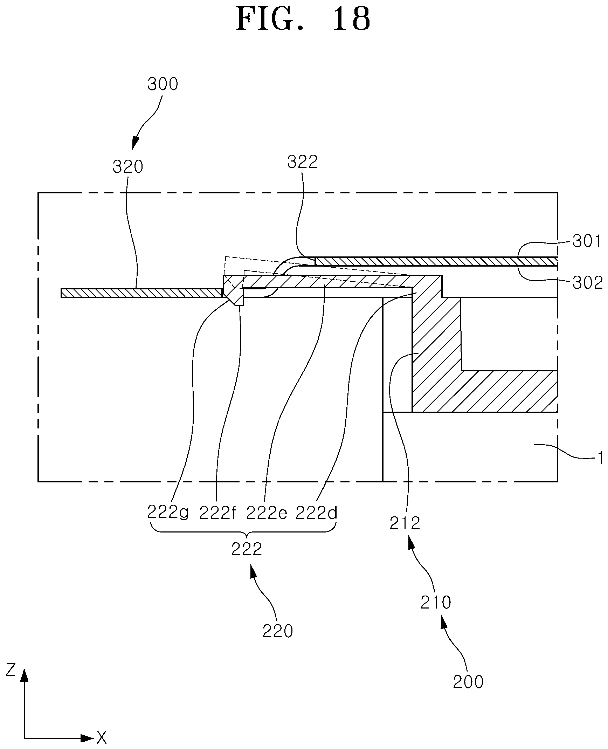

FIG. 16 is a partial enlarged perspective view schematically illustrating a state before a second portion of a cover according to the present embodiment of the present disclosure is caught by a second hook; FIG. 17 is a partial enlarged perspective view schematically illustrating a state in which the second portion of the cover according to the present embodiment of the present disclosure is caught by the second hook; and FIG. 18 is a cross-sectional view schematically illustrating a state in which the second hook according to the present embodiment of the present disclosure is elastically deformed.

Referring to FIGS. 14 to 18, the second hook 222 may be provided on the second side 212 of the holder frame portion 210. In an embodiment, a plurality of second hooks 222 may be provided. At least one pair of second hooks 222 may be disposed to be spaced apart in a direction parallel to the third direction.

The second hook 222 may fix the second portion 320 of the cover 300. The second hook 222 may include a first hook extension portion 222d, a second hook extension portion 222e, and a hook catching portion 222f.

The first hook extension portion 222d may extend from the second side 212 of the holder frame portion 210 in the second direction. The first hook extension portion 222d may pass through the cover 300. The first hook extension portion 222d may pass through the second portion 320 of the cover 300 to restrict movement of the cover 300 in the first direction.

The cover 300 may be provided with a second through hole portion 322. The second through hole portion 322 may be provided in the second portion 320 of the cover 300. The second through hole portion 322 may be formed by passing through the second portion 320. The second hook 222 may pass through the second through hole portion 322.

As the first hook extension portion 222d comes into contact with an inner surface of the second through hole portion 322, movement of the cover 300 in the first direction may be restricted. In an embodiment, as the cover 300 moves in the first direction, the inner surface of the second through hole portion 322 comes into contact with the first hook extension portion 222d, thereby restricting movement of the cover 300 in the first direction.

The second hook extension portion 222e may extend from the first hook extension portion 222d in the direction opposite to the first direction. The second hook extension portion 222e may restrict movement of the cover 300 in the second direction. The second hook extension portion 222e may come into contact with the first surface 301 of the cover 300. As the lower surface of the second hook extension portion 222e comes into contact with the first surface 301 of the cover 300, movement of the second portion 320 in the second direction may be restricted.

The hook catching portion 222f may extend from the second hook extension portion 222e in the direction opposite to the second direction. The hook catching portion 222f may restrict movement of the cover 300 in the opposite direction of the first direction. As the second portion 320 of the cover 300 comes into contact with the second hook extension portion 222e, movement of the cover 300 in the direction opposite to the first direction may be restricted.

The hook catching portion 222f according to an embodiment may be further provided with a second inclined surface 222g. The second inclined surface 222g may be formed on an outer surface of the hook catching portion 222f, as shown in FIGS. 17 and 18. The second inclined surface 222g may be formed to be inclined downward from the outer surface of the hook catching portion 222f in the direction opposite to the second direction.

The second inclined surface 222g may come into contact with the inner surface of the second through hole portion 322. The second inclined surface 222g may interfere with the second through hole portion 322 as the cover 300 moves in the first direction. The second inclined surface 222g may allow movement of the cover 300 in the first direction.

As the cover 300 presses the second inclined surface 222g in the first direction, the second hook 222 may be elastically deformed in the second direction. In an embodiment, as the second portion 320 presses the second inclined surface 222g in the first direction, the second hook 222 may be elastically deformed in the second direction.

When the cover 300 moves in the first direction while the inner surface of the second through hole portion 322 comes into contact with the second inclined surface 222g and the second portion 320 of the cover 300 presses the second inclined surface 222g in the first direction, the second hook 222 may be elastically deformed in the second direction.

The lower surface of the second hook extension portion 222e, which is elastically restored as the cover 300 moves in the first direction, may be seated on the first surface 301 of the cover 300, and the second portion 320 of the cover 300 may be positioned to be caught by the hook catching portion 222f.

According to one or more embodiments of the present disclosure, a tolerance can be minimized or reduced when assembling a cover by applying a structure in which the cover is assembled to a holder in a sliding manner instead of a conventional hook fastening method.

However, aspects and effects obtainable through the present disclosure are not limited to the above aspects and effects, and other technical aspects and effects that are not mentioned will be clearly understood by those skilled in the art from the description of the present disclosure.

While the present disclosure has been described with reference to some embodiments shown in the drawings, these embodiments are merely illustrative and it is to be understood that various modifications and equivalent other embodiments can be derived by those skilled in the art on the basis of the embodiments.

## Claims

1. A battery module comprising:
a housing;
one or more battery cells in the housing;
a holder coupled to the housing; and
a cover slidably coupled to the holder in a first direction and arranged to face the holder in a second direction intersecting the first direction.

2. The battery module as claimed in claim 1, wherein the holder comprises a holder frame portion seated on the housing, and
a fixing portion protruding from the holder frame portion and fixing the cover.

3. The battery module as claimed in claim 2, wherein the fixing portion comprises:
a first hook at a first side of the holder frame portion;
a second hook at a second side of the holder frame portion that is spaced apart from the first side in a direction opposite to the first direction; and
a third hook at a third side of the holder frame portion crossing the first side and the second side.

4. The battery module as claimed in claim 3, wherein a plurality of third sides are spaced apart in a direction parallel to a third direction intersecting the first direction and the second direction.

5. The battery module as claimed in claim 3 or claim 4, wherein the first hook comprises:
a first hook body portion extending from the first side in the second direction and configured to restrict movement of the cover in the first direction; and
a first hook catching portion extending from the first hook body portion in the direction opposite to the first direction to contact a first surface of the cover to restrict movement of the cover in the second direction.

6. The battery module as claimed in any one of claims 3 to 5, wherein the second hook comprises:
a second hook body portion extending from the second side in the second direction and configured to restrict movement of the cover in the direction opposite to the first direction; and
a second hook catching portion extending from the second hook body portion in the first direction to contact a first surface of the cover to restrict movement of the cover in the second direction.

7. The battery module as claimed in claim 6, wherein the second hook catching portion comprises a first inclined surface to contact a second surface of the cover, which faces a direction opposite to the first surface, and is configured to guide movement of the cover in a direction opposite to the second direction.

8. The battery module as claimed in claim 7, wherein the second hook is elastically deformable toward the direction opposite to the first direction as the cover presses the first inclined surface in the direction opposite to the second direction.

9. The battery module as claimed in any one of claims 3 to 8, wherein the third hook comprises:
a third hook body portion extending from the third side in the second direction and passing through the cover in the second direction; and
a third hook catching portion extending from the third hook body portion in a direction parallel to a third direction intersecting the first direction and the second direction to contact a first surface of the cover to restrict movement of the cover in the second direction.

10. The battery module as claimed in any one of claims 3 to 9, wherein the cover comprises:
a first portion seated on the first side and positioned to be caught by the first hook;
a second portion seated on the second side and positioned to be caught by the second hook; and
a third portion seated on the third side and positioned to be caught by the third hook.

11. The battery module as claimed in claim 10, wherein the third portion comprises a first slit hole portion through which the third hook passes in the second direction, and a second slit hole portion extending from the first slit hole portion in the direction opposite to the first direction and through which the third hook passes in the second direction.

12. The battery module as claimed in claim 11, wherein a width of the second slit hole portion parallel to a third direction intersecting the first direction and the second direction is smaller than a width of the first slit hole portion parallel to the third direction.

13. The battery module as claimed in any one of claims 10 to 12, wherein the fixing portion further comprises a protrusion extending from the second side in the second direction to be spaced apart from the second hook in the first direction, and passing through the second portion.

14. The battery module as claimed in any one of claims 10 to 13, wherein the second hook comprises:
a first hook extension portion extending from the second side in the second direction and passing through the second portion to restrict movement of the cover in the first direction;
a second hook extension portion extending from the first hook extension portion in the direction opposite to the first direction to contact a first surface of the cover to restrict movement of the cover in the second direction; and
a hook catching portion extending from the second hook extension portion in a direction opposite to the second direction to restrict movement of the cover in the direction opposite to the first direction.

15. The battery module as claimed in claim 14, wherein the second portion comprises a second through hole portion through which the second hook passes.
